# EUROPEAN PATENT APPLICATION

(11) **EP 2 219 144 A1**
(43) Date of publication of application: **18.08.2010**
(21) Application number: 09173067.1
(22) Date of filing: 14.10.2009
(51) Int. Cl.: G06Q 10/00

(54) **A method for analysing data transmissions**

(71) Applicant: Vision Holdings Limited, Dublin 3 (IE)
(72) Inventor: Glennon, William Augustine, Dublin 6 (IE); Adams, Gerald Patrick, Dublin 4 (IE)
(74) Representative: McCrann, Sarah Ann

(57) **Abstract**

A method for analysing data transmissions relating to activities of an organisation having a plurality of users, the method operating in a system comprising a central server, a plurality of User Computer Devices (UCD); and a communications network connected therebetween. Tasks carried out within the organisation are classified within activities between two or more parties, thus providing them with context. This context provides ranking information which is then used to reduce the amount of analysis that is carried out on the data transmissions, thus reducing the processing requirements for data analysis.

## Description

The present invention relates to a method for analysing data transmissions relating to activities of an organisation having a plurality of users, the method operating in a system comprising a central server, a plurality of User Computer Devices (UCD); and a communications network connected therebetween.

It is common for large organisations, particularly those having a substantial customer service function, to make use of a workflow and management information type tool. Such a tool serves to analyse and provide feedback on the efficiency and effectiveness of the work carried out by the organisation by monitoring and logging data transmissions. Ideally, such a tool will also flag potentially problematic matters. Such workflow tools essentially function in a manner wherein a task that is to be completed by a user or worker is identified and its progress is monitored over time. This monitoring involves saving data to log files on a central server and then analysing and processing the data in these log files to assess the status of the task, and the productivity and efficiency of its completion. Through analysis of the log files, it may be possible to identify tasks that have encountered or may encounter difficulties in their completion.

There are, however, a number of problems associated with the known workflow tools and the methods of analysing data transmissions associated therewith. Large numbers of data transmissions are logged and analysed resulting in the processing of large amounts of data. Much of this data is not necessary, and provides no useful information. However, this data is nonetheless stored and analysed to provide reports and other information as there is no efficient manner of classifying or sorting the information according to relevance. The storage, processing and analysis of this data represent a large memory and processing requirement, and yet often provide very few useful results. Therefore such data analysis methods require extensive resources, but do not always provide the type of results that merit such an investment.

It is therefore an object of the present invention to provide an improved method for analysis of data transmissions that provides improved results and operates in a more efficient manner.

Throughout the specification the term activity will be used to refer to a project carried out between two or more parties within the area of interest of the organisation, consisting of the offer to, or request for, supply of a service, through stages such as negotiation and status reports through to completion of the activity to the satisfaction of all parties. An activity may be initiated within the organisation to be completed within the organisation; it may be initiated externally, for example by a customer or supplier of the organisation, for completion within the organisation; or it may be initiated from within the organisation for completion by a third party. Furthermore, the term user will be used to refer to any person or other entity who may carry out business with or within an organisation, for example an employee, customer, client, or supplier; while the term user computing device will be used to refer to any form of computing device used by such a user, including desktop computers, laptop computers, handheld personal computing devices, personal communications devices and the like. A user computing device may further include a virtual computing device that is not tied to a particular hardware device, such as a web email account, other online presence or the like.

### STATEMENTS OF INVENTION

According to the invention there is provided a method for analysing data transmissions relating to the activities of an organisation having a plurality of users, the method operating in a system comprising
a central server;
a plurality of User Computing Devices (UCD); and
a communications network connected therebetween,
wherein the central server comprises
server memory;
a server processor; and
server communications means;
and the UCDs each comprise
UCD memory,
a UCD processor; and
UCD communication means
wherein the method has an initialization phase comprising the steps of
(a) generating a database in central server memory comprising a record for each of a subset of the plurality of users of the organization, wherein each record comprises
   user identification details,
   user relationship details, and
   user ranking details, the user ranking details comprising
   an overall ranking,
   an activity-type ranking, and
   one or more relationship-specific rankings;
(b) initializing all user ranking details within the database to a low ranking value;
   on completion of the initialization phase, the method commencing a learning phase comprising the steps of
(c) the central server receiving a copy of all activity related data transmissions between UCDs;
(d) the central server analyzing all received data transmissions and identifying any data transmissions relating to the instigation of an activity;
(e) for all data transmissions instigating an activity, the central server creating a data structure in memory, the data structure comprising
   a customer UCD attribute identifying the UCD that requested the activity;
   a performer UCD attribute identifying the UCD that received the request for the activity;
   an activity attribute identifying the activity type; and
   a Unique Identifier (UI) for the activity;
(f) the central server transmitting the UI to each UCD identified in the data structure associated with that UI;
(g) each UCD storing the UI in UCD memory;
(h) each UCD embedding the UI in all further data transmissions relating to that activity;
(i) the central server tracking all activities within the organisation by identifying Uls within received data transmissions;
(j) the central server identifying the completion of an activity by key-word analysis of the content of the data transmissions;
(k) on completion of each activity, the central server identifying whether the activity was completed successfully by key-word analysis of the content of the data transmissions;
(l) the central server modifying the user ranking details of the users of the UCDs involved in the activity based on the success of the activity;
   when sufficient activities have completed such that the majority of user ranking details have been modified, the method completing the learning phase and commencing an operational phase comprising the steps of
(m) the central server receiving a copy of all activity related data transmissions between UCDs;
(n) the central server identifying data transmissions that are instigating activities, generating the data structure for each initiated activity and transmitting the UI to each UCD identified in the data structure;
(o) the central server calculating an activity ranking for the initiated activity using the ranking details stored in the database;
(p) identifying activities having a low activity ranking and activities having a high activity ranking;
(q) for activities having a low activity ranking; the central server monitoring all data transmissions containing the UI for that activity and submitting those data transmissions for analysis and processing;
(r) for activities having a high activity ranking; the central server disregarding all data transmissions containing the UI for that activity.

In this way, information is gathered only where it is required and processing and memory resources are not used to analyse irrelevant data. Each new activity is treated as an entity involving contributions from, and interactions between, at least two separate parties, and is thereby provided with context. By viewing this in contrast to the task-based method where the activity would be treated as a plurality of unrelated single-person tasks, it is clear that an improved method is provided. By placing the data transmissions in context within the data structure, it is much easier to assess the relevance and importance of the data that has been gathered. By taking the past performance of the relevant parties involved in an activity into account, specific and relevant data can be gathered as to the likelihood of success of the activity when handled by those parties. This likelihood of success is represented as rankings, which facilitates the evaluation of each individual activity so as to identify whether or not it is likely to be problematic. Potentially problematic activities will have a low ranking and can then be processed appropriately, for example, the activity could be flagged for the parties involved to provide frequent status updates to a supervisor or the like. Meanwhile, high rankings indicate activities that are likely to conclude satisfactorily, and can essentially be ignored. The data transmissions relating to these high ranking activities are disregarded by the central server, thereby eliminating the storage and processing requirements for those data transmissions. These resources may then be used elsewhere, and while there may be temporarily large processing and memory requirement during the learning phase of the method of the invention, the processing and memory resource requirement in the operating phase of the method will be much lower than for currently available systems. The method of the invention allows for the large amounts of data available to be filtered such that only useful and relevant data is reported and activities that are likely to conclude successfully are not monitored.

In another embodiment of the invention there is provided a method in which the UI for an activity is generated based on the customer UCD attribute, the performer UCD attribute, the activity attribute and the date and time of the data transmission instigating the activity. This is a particularly efficient and convenient manner of generating a unique identifier for an activity. In some cases, the activity may be characterised using two or more activity attributes, which would then be included in the UI.

In a further embodiment of the invention there is provided a method in which the data transmissions are emails. In this way, the invention may be integrated conveniently with the organisation's existing IT systems.

In an alternative embodiment of the invention there is provided a method in which the UI takes the form of a URL embedded in the header information of the email. This is a particularly convenient and efficient manner of including the UI within the email.

In another embodiment of the invention there is provided a method comprising the intermediate step of the central server identifying a new user in the organisation and creating a record in the database in central server memory for that user. In this way the method of the invention can adapt to new users in the organisation such as new employees, new customers or new suppliers.

In an embodiment of the invention there is provided a method comprising the intermediate step of the central server adding a new relationship specific ranking to a record in the database. In this way, new relationships within the organisation such as those involving new clients or new employees can be included within the database and rankings calculated to reflect their performance.

### DETAILED DESCRIPTION OF THE INVENTION

The invention will now be more clearly understood from the following description of an embodiment thereof given by way of example only with reference to the accompanying drawings in which:-
Fig. 1 is a diagrammatic representation of the system in which the method according to the invention operates;
Fig. 2 is a block diagram of a central server for use in the system;
Fig. 3 is a block diagram of a User Computing Device for use in the system;
Fig. 4 is a block diagram representing the record generated for each user within the system by the method of the invention;
Fig. 5 is a block diagram representing the data structure created by the method according to the invention; and
Fig. 6 is a flow chart of the method according to the invention.

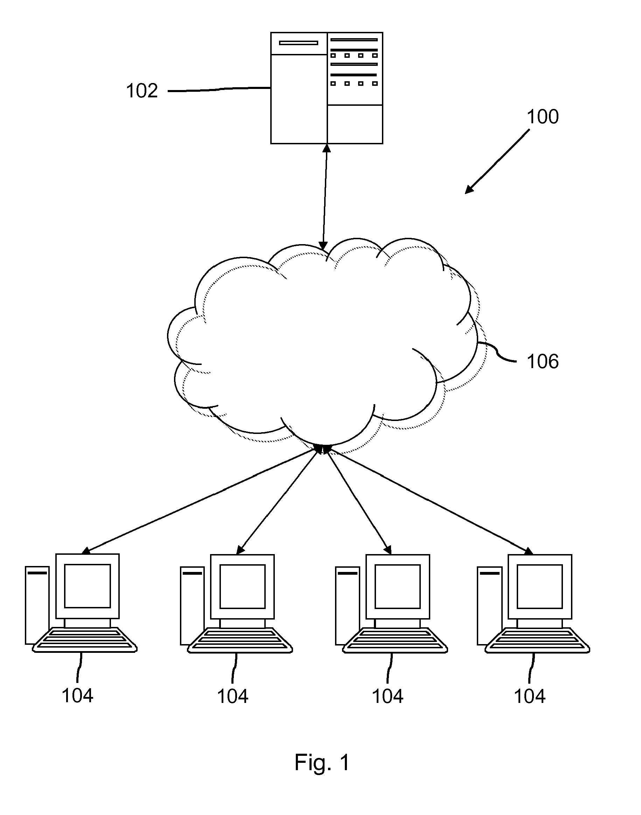

Referring to the drawings, and initially to Fig. 1 thereof, there is shown a system, indicated generally by the reference numeral 100, comprising a central server 102, a plurality of User Computing Devices (UCD) 104 and a communications network 106 connected therebetween. The method of the invention operates on the system 100. The system 100 operates within an organisation having many users including employees, customers and suppliers, who work together to carry out a wide variety of activities which, when combined, amount to the business of the organisation. Such activities may be internal activities carried out within the organisation, for example one user requesting another user to carry out a certain task. Alternatively, activities may be external activities wherein they include a task requested by a third party external to the organisation. Each user is equipped with a User Computing Device such as a desktop or laptop computer. Additionally, the UCD may comprise a handheld computing device or similar.

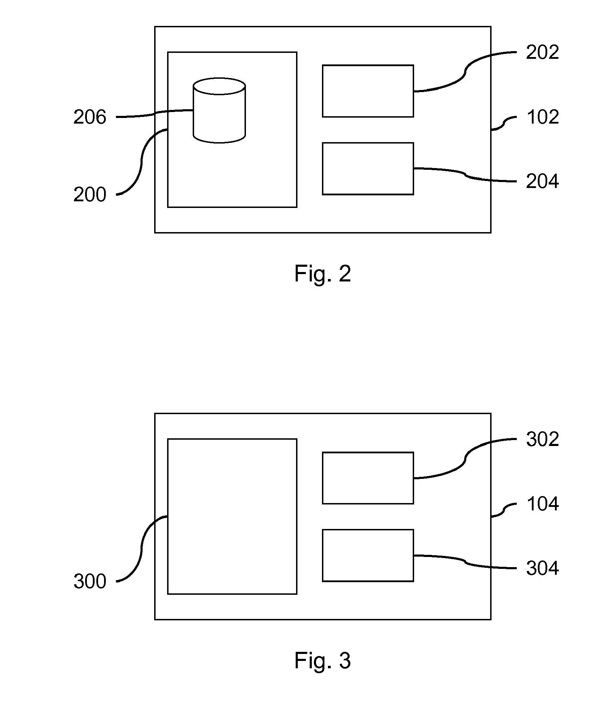

Referring now to Fig. 2 there is shown a block diagram of the central server 102 which comprises server memory 200, a server processor 202 and server communications means 204. The server memory 200 comprises a database 206. The central server 102 may comprise any form of standard server computer capable of running software to implement the method of the invention.

Referring now to Fig. 3, there is shown a block diagram of an exemplary UCD 104 which comprises UCD memory 300, a UCD processor 302 and UCD communications means 304.

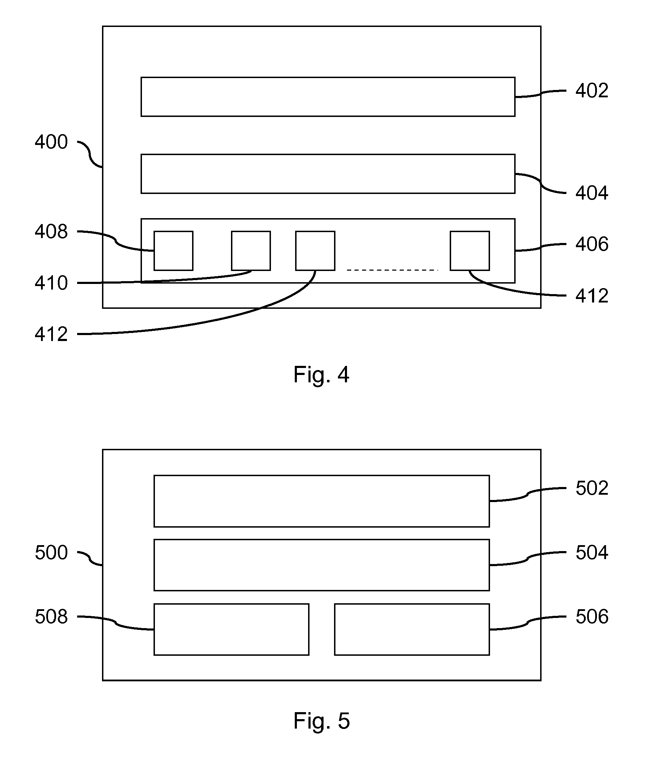

Referring now to Fig. 4, there is shown a representation of a record 400 generated during the method of the invention and stored in the database 206 in server memory 200. The record 400 comprises user identification details 402, user relationship details 404, and user ranking details 406, the user ranking details comprising an overall ranking 408, an activity-type ranking 410, and a plurality of relationship-specific rankings 412.

Referring now to Fig. 5, there is shown a representation of a data structure 500 created during the method of the invention in server memory. The data structure 500 comprises a customer UCD attribute 502 identifying the UCD that requested the activity; a performer UCD attribute 504 identifying the UCD that received the request for the activity; an activity attribute 508 identifying the activity type; and a Unique Identifier (UI) 506 for the activity. The customer UCD attribute 502 performer UCD attribute 504 may take the form of alphanumeric data related to the names of the users involved or it may be a simple number corresponding to an employee number of the like. Similarly, the activity attribute 508 may comprise alphanumeric data or simple numerical data, for example based on a look-up table of activities types each having an associated number.

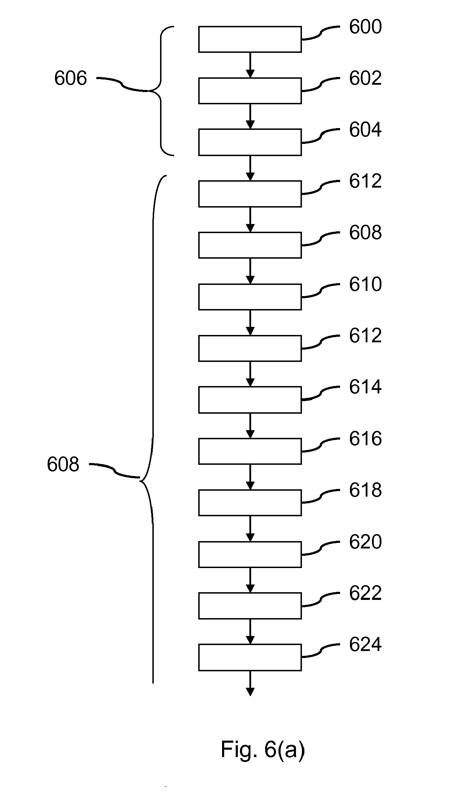

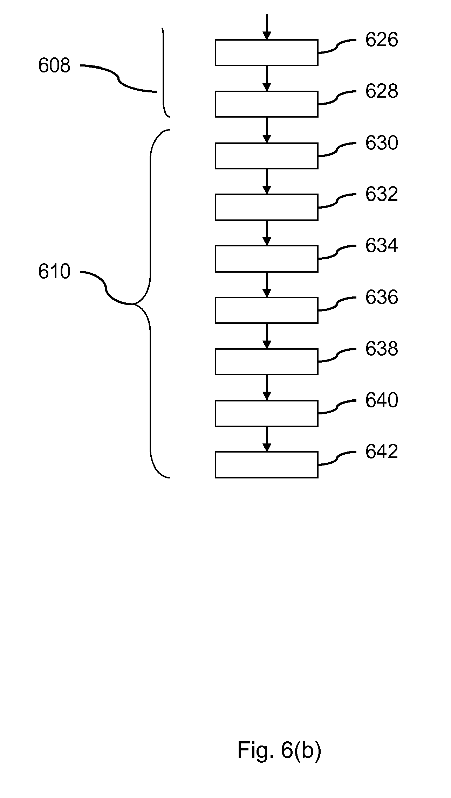

Referring now to Fig. 6, there is shown a flow chart illustrating the operation of the method of the invention. The method comprises an initialisation phase wherein, in step 600, a database 206 is generated in server memory 200 of the central server 102. In step 602, the database 206 is populated with a record 400 for each user of a subset of the users of the organisation which is implementing the method of the invention. Each user record comprises data fields for storing user identification details, user relationship details, and user ranking details, the user ranking details comprising an overall ranking, an activity-type ranking, and one or more relationship-specific rankings. Initially, the relationship-specific rankings will refer to other users that the first user is expected to engage with in activities regularly. The initial subset of users to have associated records created in the database may comprise all the known users of the organisation at the time or may comprise the majority of the employees of the organisation and selected customer and suppliers; or other subsets depending on the size and requirements of the organisation. In step 604, each data field within the user ranking details is set to an initial low value for each record 400 in the database 206. The initial low ranking value may be zero or one, for example.

The method of the invention comprises three phases - an initialisation phase 606, a learning phase 608 and an operational phase 610. Steps 600, 602 and 604 correspond to the initialisation phase 606 of the method of the invention.

Step 612 represents the first step in the learning phase of the method of the invention. In this step, each UCD 106 transmits a copy of all the activity-related data transmissions it sends to the central server 102. It will be understood that data transmissions coming from users of the organisation who are not direct employees of the organisation may be indirectly routed to the central server, by the employee or the mail server of the main entity of the organisation, e.g. a company. The data transmissions will in general comprise email messages but may comprise other forms of explicit person-to-person data transmissions. In step 614, the central server 102 analyses each of the data transmissions it receives to identify if the data transmission relates to the initiation of an activity. Each activity will in general commence with a request from a customer UCD to a performer UCD, or alternatively a performer UCD may contact the customer UCD with an "offer" and thus commence the activity. This analysis is carried out using keyword analysis, wherein the server memory comprises a look-up table of words that are likely to represent the request for the supply of a product or service, or and offer to supply a product or service. The central server 102 compares the words contained within the data transmission to the words in the look-up table. If there is a match, then that data transmission is classified as initiating an activity. Users may also deliberately tag a data transmission as instigating an activity, for example by inserting known keywords into the data transmission. In some cases, the central server may assume that any data transmission between two users, that does not comprise the UI of an existing activity represents the instigation of a new activity.

Next, in step 616 the central server 102 creates a data structure 500 for the initiated activity in server memory 200. The data structure comprises a customer UCD attribute 502 identifying the UCD that requested the activity, a performer UCD attribute 504 identifying the UCD the received the request for the activity, an activity attribute 506 identifying the activity type and a Unique Identifier (UI) for the activity. Step 616 further comprises the generation of the UI for the activity. The UI comprises a data string comprising the customer UCD attribute 502, the performer UCD attribute 504, the activity attribute 506 and the timestamp of the data transmission that initiated the activity.

In step 618, the central server 102 transmits the UI to each of the UCDs involved in the activity. In general, there will be two UCDs, the customer UCD and the performer UCD involved in each activity. However, in some cases, there will be further UCDs involved, each of these UCDs will have an attribute in the data structure 500 for the activity and the central server will send the UI to each UCD having an attribute in the data structure. The transmission of the UI to each of the UCDs involved in the activity may comprise a direct or indirect transmission, for example, if the UCD is external to the organisation, the central server may transmit the UI to the UCD that is internal to the organisation, which user will then forward the UI to the external UCD.

In step 620, the UCDs store the received UI in UCD memory 300. Subsequently, in step 622, the UCDs include the UI in any further data transmissions relating to that activity. In step 624, the central server receives all activity related data transmissions that are transmitted within the system 100 and check each data transmission for its UI. In this way, the central server keeps track of all the data transmissions relating to a particular activity. All data transmissions relating to a particular activity will be stored together in memory.

In step 626, the central server analyses each data transmission for data transmissions that complete the activity. This is carried out through keyword analysis in a manner similar to step 614. Next, in step 628, the central servers analyses the data transmissions relating to that activity to establish if the activity was successfully completed. This is carried out again through keyword analysis of the data transmissions. Additionally, some or all of the users involved in the activity may provide feedback on the outcome of the activity, for example by providing user- generated rankings for one or more categories relating to the activity in question.

Next, in step 630, the central server updates the user ranking details 406 for each of the UCDs that have an attribute in the data structure for the activity based on the success of the activity. The activity-type ranking 410 corresponding to the type of activity is modified and the relationship-specific ranking 412 corresponding to each of the other UCDs involved in the activity will be adjusted. The overall ranking 408 corresponds to a weighted sum of the activity-type rankings 410 and relationship-specific rankings 412. It will be clear to the person skilled in the art that such ranking updates may be carried out in a wide variety of ways. For example, a simple ranking scheme would involve starting with a ranking of 0 and adding 1 for a successfully completed activity and subtracting 1 for an unsuccessfully completed activity. Alternatively, more complex ranking systems could be used and such ranking schemes are apparent to the person skilled in the art.

Steps 612 to 630 are repeated for a large number of activities until, in step 632 the central server identifies that the majority of the user ranking details 406 have been modified. This represents the end of the learning phase 608.

Once the learning phase 608 is completed, the operational phase 610 commences. The first step of the operational phase 610 is step 632 in which the UCDs 104 continue to transmit copies of all activity related transmissions to the central server 102. In step 634, the central server 102 identifies all activity-initiating data transmissions as in step 614, generates the data structure for each initiated activity, including generating the UI and transmits the UI to all relevant UCDs 104.

In step 636, the central server 102 calculates an activity ranking for each newly initiated activity. The activity ranking is calculated on the basis of the user ranking details of each UCD involved in the activity. The activity ranking may be calculated in a number of ways, which will be apparent to the person skilled in the art. For example, the activity ranking may be based purely on the overall rankings of the relevant UCDs 104. Alternatively, the activity ranking may be based heavily or purely on the activity-type rankings corresponding to the activity type of the newly initiated activity, or the relationship-specific ranking for the relationships between the UCDs involved in the newly initiated activity may be given increased weight in the activity ranking. Additionally, the activity ranking may be based on a combination of the various rankings.

In step 638, the central server 102 identifies activities having a low activity ranking and activities having a high activity ranking. Then in step 640, which continues indefinitely, all data transmissions for activities having a low activity ranking are stored for further processing and analysis by the system so as to endeavour to ensure a successful outcome. Simultaneously, in step 642 data transmissions from activities with a high activity ranking are simply stored but are not in general monitored or analysed further.

The communications network 106 may be based on any form of communications infrastructure and protocols or a combination of such infrastructures and protocols. Additionally, the communications network may be whole or partially controlled or contained within the organisation implementing the method of the invention, or alternatively, the communications network 106 may comprise elements of third party of external communications networks. The central server may comprise a dedicated hardware device or it may correspond to a server computer that hosts multiple software server applications. Generally, the organisation will have one or more servers in place relating to variety of applications such as communications, data storage and organisation specific operations.

It will be understood by the person skilled in the art that the central server can identify relationships between users based on the history of the activities carried out between them. Factors taken into account in estimating the relationship ranking include the number of prior activities, the frequency of the activities and the time that has passed since the last activity.

It will be understood by the person skilled in the art that the data transmissions may comprise any kind of explicit person to person communication, including SMS, Chat messages, Twitter, forums, comments on blogs, and so on. Also, in certain cases implicit messages may be classified as activity-related data transmissions, for example when a person on a web site experiences a problem, and a "problem detected" page is displayed, or the website displays a message saying the organisation cannot do business with a customer. In such cases, central server may analyse website transaction logs to identify activity related data transmissions.

It will be understood that the when the database is initially generated in the central server memory, record templates may be generated to represent a type of user, so that each user does not get a record initially. In this way, for example, a customer template record would be generated and given some standard attributes and rankings. Furthermore, the customer template record would facilitate the calculation of relationship rankings for other users who may be involved in activities with customers.

It will be understood by the person skilled in the art that the activity-related data transmissions may be transmitted to the central server in a variety of ways including cc-ing emails a central server email account; the user following an embedded URL in an earlier data transmission; loading and analysis of gathered logs such as website transaction logs web; embedding hyperlinks in previously stored data comprising the UI; and such techniques.

In the specification the terms 'comprise', 'comprises', 'comprised' and 'comprising' or any variation thereof and the terms 'include', 'includes', 'included' or 'including' or any variation thereof are considered to be totally interchangeable and they should all be afforded the widest possible interpretation.

The invention is not limited to the embodiment herein described, but may be varied in both construction and detail within the terms of the claims.

## Claims

1. A method for analysing data transmissions relating to the activities of an organisation having a plurality of users, the method operating in a system comprising
a central server;
a plurality of User Computing Devices (UCD); and
a communications network connected therebetween,
wherein the central server comprises
server memory;
a server processor; and
server communications means;
and the UCDs each comprise
UCD memory,
a UCD processor; and
UCD communication means
wherein the method has an initialization phase comprising the steps of
(a) generating a database in central server memory comprising a record for each of a subset of the plurality of users of the organization, wherein each record comprises
user identification details,
user relationship details, and
user ranking details, the user ranking details comprising
an overall ranking,
an activity-type ranking, and
one or more relationship-specific rankings;
(b) initializing all user ranking details within the database to a low ranking value;
on completion of the initialization phase, the method commencing a learning phase comprising the steps of
(c) the central server receiving a copy of all activity related data transmissions between UCDs;
(d) the central server analyzing all received data transmissions and identifying any data transmissions relating to the instigation of an activity;
(e) for all data transmissions instigating an activity, the central server creating a data structure in memory, the data structure comprising
a customer UCD attribute identifying the UCD that requested the activity;
a performer UCD attribute identifying the UCD that received the request for the activity;
an activity attribute identifying the activity type; and
a Unique Identifier (UI) for the activity;
(f) the central server transmitting the UI to each UCD identified in the data structure associated with that UI;
(g) each UCD storing the UI in UCD memory;
(h) each UCD embedding the UI in all further data transmissions relating to that activity;
(i) the central server tracking all activities within the organisation by identifying Uls within received data transmissions;
(j) the central server identifying the completion of an activity by key-word analysis of the content of the data transmissions;
(k) on completion of each activity, the central server identifying whether the activity was completed successfully by key-word analysis of the content of the data transmissions;
(l) the central server modifying the user ranking details of the users of the UCDs involved in the activity based on the success of the activity;
when sufficient activities have completed such that the majority of user ranking details have been modified, the method completing the learning phase and commencing an operational phase comprising the steps of
(m) the central server receiving a copy of all activity related data transmissions between UCDs;
(n) the central server identifying data transmissions that are instigating activities, generating the data structure for each initiated activity and transmitting the UI to each UCD identified in the data structure;
(o) the central server calculating an activity ranking for the initiated activity using the ranking details stored in the database;
(p) identifying activities having a low activity ranking and activities having a high activity ranking;
(q) for activities having a low activity ranking; the central server monitoring all data transmissions containing the UI for that activity and submitting those data transmissions for analysis and processing;
(r) for activities having a high activity ranking; the central server disregarding all data transmissions containing the UI for that activity.

2. A method as claimed in claim 1 in which the UI for an activity is generated based on the customer UCD attribute, the performer UCD attribute, the activity attribute and the date and time of the data transmission instigating the activity.

3. A method as claimed in claim 1 or 2 in which the data transmissions are emails.

4. A method as claimed in claim 3 in which the UI takes the form of a URL embedded in the header information of the email.

5. A method as claimed in any preceding claim comprising the intermediate step of the central server identifying a new user in the organisation and creating a record in the database in central server memory for that user.

6. A method as claimed in any preceding claim comprising the intermediate step of the central server adding a new relationship specific ranking to a record in the database.
